# EUROPEAN PATENT APPLICATION

(11) **EP 3 112 926 A1**
(43) Date of publication of application: **04.01.2017**
(21) Application number: 15306023.1
(22) Date of filing: 29.06.2015
(51) Int. Cl.: G02C 7/10

(54) **OPHTHALMIC LENS WITH IMPROVED COLOUR PERCEPTION**

(71) Applicant: ESSILOR INTERNATIONAL (Compagnie Générale d'Optique), 94220 Charenton-le-Pont (FR)
(72) Inventor: ZHANG, Xiaohong, DALLAS, TX Texas 75034 (US); POPHILLAT, Olivier, 94227 CHARENTON LE PONT cedex (FR); BITEAU, John, DALLAS, TX Texas 75034 (US); MARCK, Christelle, 94227 CHARENTON LE PONT cedex (FR)
(74) Representative: Korakis-Ménager, Sophie

(57) **Abstract**

Ophthalmic lens for improved colour perception comprising a first organic optical filter having a reflection band with a reflection peak comprised in the range [400nm-460nm], and a second organic optical filter F2, different from F1, having a reflection band with a reflection peak comprised in the range [530nm-650nm].

## Description

### Field of the invention

The present invention relates to optical filters having several selective reflection bands. Such filters may be laid on ophthalmic lenses, especially on spectacle lenses.

### Background of the invention

Optical filters are of great importance in everyday life. With filters, one can select and control which wavelength of the electromagnetic spectrum will be allowed to go through a material, or not.

Several technologies are used to make filters. Absorption filters include moieties (dyes and/or pigments usually) which absorbs light with a given wavelength band, this band is usually large and not very selective. Interferential filters are based on multilayered materials. By a precise design of the nature, thickness and number of layers, one can obtain a filter with a specific light reflection spectrum, defining reflection or transmission bands. High selectivity, i.e. narrow width for a reflected or transmitted band of light wavelengths, is obtained with a large number of layers. These filters can be based on inorganic or organic layers.

In the following, the width of a filter band will be defined as the Full Width at Half Maximum (FWHM).

In the visible light (VIS) electromagnetic range (from 380nm to 780nm), filters may be used to control intensity of light, or colour of light. In some cases, specific light wavelengths are linked to biologic processes (melatonin secretion, circadian rhythm regulation, eye diseases...) or vision efficiency (contrast, low intensity perception, dyschromatopsia...).

It is then desirable to filter out selectively some specific bands of light wavelengths to protect eyes. But in the same time, overall perception of colours should not be modified. For instance, if blue light is filtered out by eyeglasses, the wearer will perceive his environment yellowish. With solar or tinted eyeglasses, contrast may be reduced. To the contrary, contrast for people having low vision capabilities or colour blindness can be enhanced with coloured filters.

To take into account all specifications in light transmission and/or reflection, several filters have to be used simultaneously.

Actually, there is still a need for associations of filters providing selective reflection of some ranges of light wavelengths without impairing colour perception or contrast.

### State of the art

US8911082 discloses filters to attenuate blur effect during driving, especially with new LED lighting. A mineral antireflective stacks with numerous layers reflects blue light (centered around 450nm emission peak in LED lamps) and green-yellow light (centered around the peak of photopic sensitivity of the eye, about 555nm). With such filters, glare is reduced. This document is moot on colour perception or contrast.

WO2014022049 discloses optical articles with two organic multi layered filters, one for UltraViolet light reflection, the other one for visible (in the high energy blue range) or InfraRed light reflection. The aim of the invention is to protect materials against ageing, i.e. degradation with ambient light. However, this document is moot on colour perception or contrast.

### Object of the Invention

An object of the invention is to use at least two organic optical filters, such as interferential multilayered organic filters, with well defined reflection bands, so as to protect eyes from potentially harmful light without modifying colour perception and contrast.

Multilayered Optical Films (MOF) present a periodic alternated structure of at least two different polymeric materials whose refractive index are slightly different. MOF may comprise up to hundreds of layers. By proper choice of refractive index, relative thickness of materials and number of layers, very selective filters can be designed. In addition, the FWHM of these filters can be selected.

Cholesteric liquid crystals, also known as chiral nematic phases, are also suitable for the invention. Cholesteric liquid crystals comprise a stack of layers of a unique material. In each layer, a nematic order is in place. From one layer to the next one, the nematic order direction twists. A full 360° twist is obtained for a specific thickness of material, defining a characteristic length in the multilayered system. Such filters exhibit regular ordering in two directions and are described in US2012320306.

Other organic filters suitable for the invention are photonic crystals. Photonic crystals are ordered one, two or three dimensional networks of objects having a refractive index different from the matrix (i.e. continuous phase, which may be organic material, gas/air or vacuum) in which they are dispersed. These materials provide with very selective filters.

The invention therefore relates to an ophthalmic lens for improved colour perception comprising
▪ a first organic optical filter F1 having a reflection band B1 with a reflection peak P1 comprised in the range [400nm-460nm], and
▪ a second organic optical filter F2, different from F1, having a reflection band B2 with a reflection peak P2 comprised in the range [530nm-650nm].

The invention also relates to a method of preparation of such an ophthalmic lens.

### Figure description

Figure 1 shows transmittance (%) versus light wavelength for a (PS/PMMA)⁴⁹PS (OT=0.5*λ₀=215nm, d_{PS}=66.5nm/d_{PMMA}=71.7nm, n_{PS}=1.617/n_{PMMA}=1.499 at λ=430nm) multilayered optical filter with dominant reflection wavelength λ₀=430nm, glued on MR8 substrate.
Figure 2 shows transmittance (%) versus light wavelength for a (PS/PMMA)¹²PS (OT=0.5*λ₀=302.5nm, d_{PS}=95.2nm/d_{PMMA}=101.5nm, n_{PS}=1.589 and n_{PMMA}=1.490 at λ=605nm) multilayered optical filter with dominant reflection wavelength λ₀=605nm, glued on MR8 substrate.
Figure 3 shows transmittance (%) versus light wavelength for the association of a (PS/PMMA)⁴⁹PS multilayered optical filter with dominant reflection wavelength λ₀=430nm and a (PS/PMMA)¹²PS multilayered optical filter with dominant reflection wavelength λ₀=605nm, glued on MR8 substrate.
Figure 4 shows transmittance (%) versus light wavelength for two multilayered optical filter with different selectivity:
   Fa (solid line): (PS/PMMA)²²PS (OT=0.5*λ₀=290nm, d_{PS}=91.1nm/d_{PMMA}=97.2nm, n_{PS}=1.591 and n_{PMMA}=1.491 at λ=580nm) with dominant reflection wavelength λ₀=580nm, FWHM=30nm, glued on MR8 substrate.
   Fb (dotted line): (PET/PMMA)¹⁴PET (OT=0.5*λ₀=290nm, d_{PET}=87.6nm/d_{PMMA}=97.2nm, n_{PET}=1.655 and n_{PMMA}=1.491 at λ=580nm) with dominant reflection wavelength λ₀=580nm, FWHM=50nm, glued on MR8 substrate.

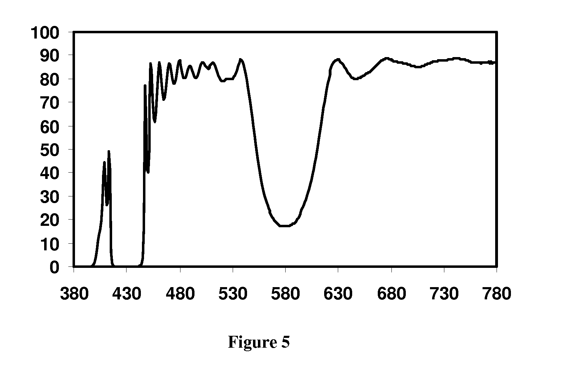

Figure 5 shows transmittance (%) versus light wavelength for the association of a (PET/PMMA)⁴⁹PET (d_{PET}=64.2nm/d_{PMMA}=71.7nm, n_{PET}=1.675 and n_{PMMA}=1.499 at λ=430nm), multilayered optical filter with dominant reflection wavelength λ₀=430nm and a (PET/PMMA)¹⁴PET (d_{PET}=87.6nm/d_{PMMA}=97.2nm, n_{PET}=1.655 and n_{PMMA}=1.491 at λ=580nm), multilayered optical filter with dominant reflection wavelength λ₀=580nm, glued on MR8 substrate.

### Detailed description

In the present invention, an ophthalmic lens is an optical element disposed on or near the eye of a wearer and aims at correcting wearer's vision, protecting wearer's eyes and/or enhance wearer's vision. Non limiting examples of ophthalmic lenses include non-corrective (also called plano or afocal lens) and corrective lenses, including single vision or multi-vision lenses like bifocal, trifocal or progressive lenses, which may be either segmented or non-segmented. Ophthalmic lenses may be semi-finished lenses or finished lenses.

The substrate can be of any type used in ophthalmic industry, including mineral glass or organic substrate.

Organic substrate may be a thermoplastic material, selected from, for instance: polyamides; polyimide; polysulfones; polycarbonates; polyurethanes and copolymers thereof; poly(ethylene terephtalate) and polymethylmethacrylate (PMMA).

As used herein, a polycarbonate (PC) is intended to mean either homopolycarbonates or copolycarbonates or block copolycarbonates.

Organic substrate may be also a thermoset material, selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phtalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate.

Particularly recommended substrates include those substrates obtained through (co)polymerization of the diethyleneglycol bis-allyl-carbonate, marketed, for example, under the trade name CR-39® by the PPG Industries company (ORMA® lenses, ESSILOR), or polythiourethanes/polysulfides, marketed for instance under MR series by Mitsui, or allylic and (meth)acrylic copolymers, having a refractive index between 1,54 and 1,58.

The ophthalmic lens according to the invention comprises a substrate and at least two organic multilayer optical filters F1 and F2.

Organic multilayer optical filter can be of various structures.

Photonic crystals are ordered one, two or three dimensional networks of objects having a refractive index different from the matrix (which may be air or vacuum) in which they are dispersed. These materials provide with very selective filters. By proper selection of objects size, refractive index and spacing, one can design a filter with well defined interference band width, attenuation of interference band and transmittance values.

Cholesteric liquid crystals, also known as chiral nematic phases, comprise a stack of layers of a unique material. In each layer, a nematic order is in place. From one layer to the next one, the nematic order direction twists. A full 360° twist is obtained for a specific thickness of material, defining a characteristic length in the multilayered system. By proper selection of full twist thickness and refractive index, one can design a filter with well defined interference band width, attenuation of interference band and transmittance values.

Other organic multilayer optical filters are known as Multilayerd Optical Filters (MOFs) in the industry. MOFs are periodic alternated structures of at least two different polymeric materials whose refractive index are different. MOFs generally comprise up to hundreds of layers. By proper choice of refractive index, relative thickness of both materials and number of layers, very selective filters can be designed showing well well defined interference band width, attenuation of interference band and transmittance values. A comprehensive description of MOFs can be found in Alfrey, Jr. et al., "Physics Optics of Iridescent Multilayered Plastic Films", Polymer Engineering and Science, vol. 9, No. 6, p. 400-404 (Nov. 1969) or in US3711176 patent.

MOFs filters are properly defined by the following parameters: refractive indices of polymeric materials used, optical thickness (OT) of the polymer pair, f-ratio of the polymer optical thickness and layer number

Many polymeric materials may be used in MOFs.

Polyester materials like dicarboxylic acid polyesters are suitable. Polyethylene terephthalate ("PET"), polyethylene naphthalate ("PEN") or a copolymer derived from ethylene glycol, naphthalene dicarboxylic acid, and terephthalic acid may be used. These polyesters have a refractive index around 1.64-1.65.

Poly(meth)acrylic materials are also suitable. These poly(meth)acrylates have a refractive index around 1.48-1.50. Polymethylmethacrylate (PMMA) is particularly suitable for the invention.

Other polymers like polyolefins, polyvinyls especially polystyrene (PS) with a refractive index around 1.57-1.60 or fluoropolymers may be used.

In MOFs, two successive layers of different polymer are the elementary periodic element of the filter. Optical thickness of MOFs is defined as the total optical thickness of such two successive layers at a reference wavelength. All layers of the same polymer are of equal thickness. In most cases, the wavelenght of dominant reflection is used as the reference wavelength. Unless otherwise mentioned, 1^{st} order reflection or primary order reflection is used. The f-ratio between the two optical thickness is 0.5, which means the polymers used have equal optical thickness.

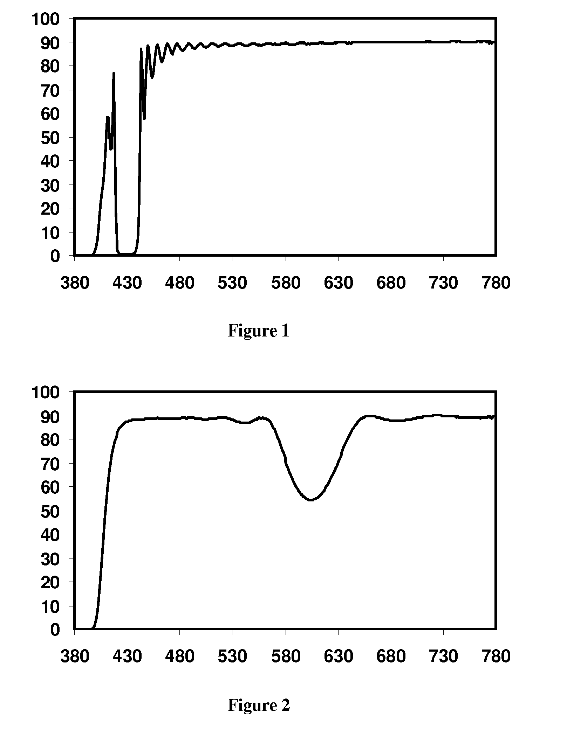

For instance, (PS/PMMA)⁴⁹PS, with first order reflection at the dominant reflection wavlength (used as reference wavelength) of 430nm, , defines a MOF with a stack of 99 alternating PS (thickness d_{PS}=66.5 nm, refractive index n_{PS}=1.617) and PMMA (thickness d_{PMMA}=71.7 nm, refractive index n_{PMMA}=1.499) and OT=d_{PS}.n_{PS}+d_{PMMA}.n_{PMMA}=0.5*430nm=215nm. Figure 1 present the transmittance curve of this MOF filter, glued on a MR8 substrate, showing a clear reflection peak (i.e. a transmission minimum) centred on 430nm.

According to the invention, a first organic optical filter F1 having a reflection band B1 with a reflection peak P1 comprised in the range [400nm-460nm] is glued on an ophthalmic lens. In some embodiments, band B1 has a reflection peak in the range [410nm-450nm].

This band B1 allows for light reflection in a harmful visible light domain. Indeed, B1 range of wavelength corresponds to visible blue light which may cause retinal damage or contribute to the development of early and late Age-Related Maculopathy (ARM), such as Age-related Macular Degeneration (AMD). Then, the ophthalmic lens according to the invention provides a protection against blue light, measured with the average transmittance TmB of the ophthalmic lens over the range 420-450 nm.

The reflection intensity of B1 may be characterized by the light transmitted at reflection peak P1. The light transmission at peak P1 should be low enough to provide an efficient protection. In specific embodiments, transmission through said ophthalmic lens at reflection peak P1 is lower than 75%, preferably lower than 50%.

According to the invention, the average transmittance TmB over the range 420-450 nm of an ophthalmic lens is lower than 80%, preferably lower than 60%, more preferably lower than 35%.

Figure 1 shows the transmittance curve of such F1 filter, with band B1 having a FWHM of 20nm, centred on peak P1 at 430nm. Light transmission at peak P1 is zero with this filter.

According to the invention, a second organic optical filter F2, different from F1, having a reflection band B2 with a reflection peak P2 comprised in the range [530nm-650nm] is comprised in said ophthalmic lens.

This band B2 may bring different effects.

When B2 is centred about 600nm, yellow light is reflected by filter F2. A good selection of characteristics for filter F2 (FWHM, reflection at peak) in relationship with filter F1 defines a transmittance curve and a transmitted light whose properties will be simultaneously safe for wearer's eyes and aesthetically appealing.

When B2 is centred about 580nm, a portion of light that is interpreted in human's chromatic response model simultaneously as red and green is reflected by filter F2. A good selection of characteristics for filter F2 (FWHM, reflection at peak) in relationship with filter F1 defines a transmittance curve and a transmitted light whose properties will be simultaneously safe for wearer's eyes and well contrasted between red and green, hence lowering the yellowish aspect of transmitted light.

The reflection intensity of B2 may be characterized by the light transmitted at reflection peak P2. The light transmission at peak P2 should be low enough to provide an efficient colour balancing. In specific embodiments, transmission through said ophthalmic lens at reflection peak P2 is lower than 80%, preferably lower than 60%.

Figure 2 shows the transmittance curve of such F2 filter, with band B2 having a FWHM of 50nm, centred on peak P2 at 605nm. Light transmission at peak P2 is 55% with this filter.

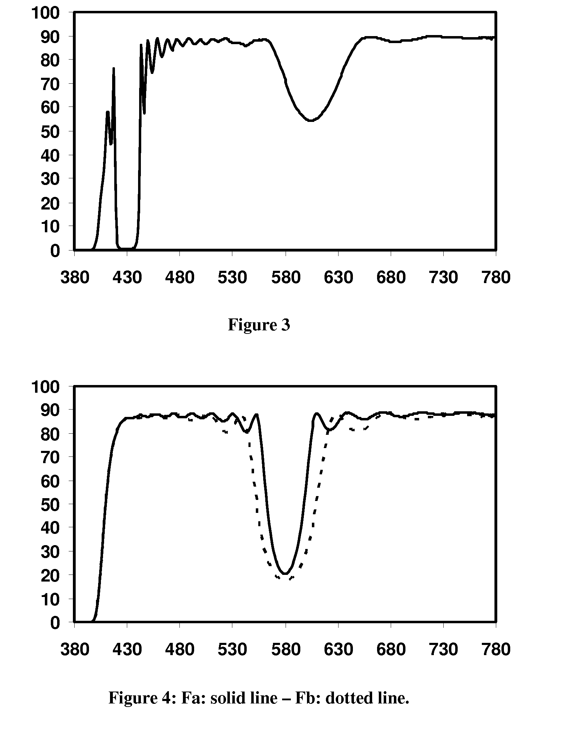

Figure 4 shows the transmittance curve of another two F2 filter with different FWHM, with band B2 having a FWHM of 30nm for filter Fa and FWHM of 50nm for filter Fb, both centred on peak P2 at 580nm. Light transmission at peak P2 is around 20% with these filters.

In the invention, light reflected by filter F1 is blue. Then, the blue part of light transmitted through said ophthalmic lens is attenuated, and the wearer will perceive distorted colours.

Besides, filter F2 allows for light reflection in a high sensitive area of eye in green-yellow colours and/or in red colour.

Without being bound by theory, it is observed that the association of F1 and F2 filters enables to manage colour of light transmitted through said ophthalmic lens. Namely, colour perceived by ophthalmic lens wearer may appear the same as if he wouldn't wear lenses. Ophthalmic lens according to the invention protects wearer from harmful blue light without modifying colour perception.

When F1 and F2 filters are superposed on an ophthalmic lens (as shown on figures 3 and 5), protection against blue light is effective and colour perceived by the wearer is not distorted.

There are many ways to characterize colour distortion. Without being bound by theory, one can use Yellowness Index (YI). This index is based on tristimulus values of light reaching the eye of the observer. If YI is positive, light is perceived yellow. If YI is negative, light is perceived blue. The lower YI value (in absolute) the better the comfort of the wearer.

According to the invention, Yellowness Index of light transmitted through ophthalmic lens is lower than 30, preferably lower than 20.

Another criterion for colour distortion can be based on car driving requirements. Ophthalmic lenses should not impair traffic light perception for the wearer. Relative visual attenuation coefficients, for recognition/detection of incandescent signal lights have been defined in ISO 8990-3 2013. Meeting this criterion is a basic way to ensure that colour perception is not distorted.

According to the invention relative visual attenuation coefficients of ophthalmic lenses, for recognition/detection of incandescent signal lights, are not less than 0.8 for Qred, 0.6 for Qyellow, 0.6 for Qgreen, and 0.4 for Qblue

Recent models have been also developed on colour appearance, CIECAM02 for instance. In this model hue (defined with four components: red, yellow, green and blue) is used to characterize colour contrast changes. Samples of defined hue (Hsource) are prepared and observed (Htrans) with or without ophthalmic lenses. The variation of hue perceived with or without ophthalmic lenses defines a colour distortion. The smaller the variation, the better the comfort for the wearer.

In particular in the invention, filter F1 brings a colour distortion that is balanced by filter F2. An object of the invention is to have a lower variation of hue perceived with lens according to the invention (i.e; substrate and filters F1 and F2) than with a lens with filter F1 alone.

In a specific embodiment, light emitted from a sample with a hue Hsource between 0 and 100 and transmitted through an ophthalmic lens according to the invention has a hue Htrans lower than Hsource, in CIECAM02 model.

In another embodiment, light emitted from a sample with a hue Hsource between 100 and 200 and transmitted through an ophthalmic lens according to the invention has a hue Htrans greater than Hsource, in CIECAM02 model.

Another aspect of the invention is a method of preparation of an ophthalmic lens with improved colour perception comprising the following steps
▪ providing a substrate with a main front face and a main rear face,
▪ gluing on any main face of said substrate, in any order:
   o a first organic optical filter F1 having a reflection band B1 with a reflection peak P1 comprised in the range [400nm-460nm], and
   o a second organic optical filter F2, different from F1, having a reflection band B2 with a reflection peak P2 comprised in the range [530nm-650nm].

By gluing, it is meant that filters F1 and/or F2 are positioned directly on the substrate, or adhered to the substrate by an adhesive layer.

Direct gluing is obtained by usual wet coating methods, including dipping, spraying, spin coating, bar coating.

Gluing via an adhesive layer is made by usual lamination methods, which may include preforming of filters F1 and/or F2 to match curvature of substrate, or successive lamination of adhesive then filters F1 and or F2.

Gluing may also include surface preparation steps.

Gluing may also include thermal, radiation or mechanical treatments to ensure a good adhesion of filters F1 and/or F2 on substrate.

In the invention, the substrate may be already coated or functionalized with layers or filters.

F1 and F2 filters may be glued on substrate in any order. F1 may be first glued on substrate, then F2 glued on F1. F2 may be first glued on substrate, then F1 glued on F1. In these embodiments, F1 and F2 are glued on the same main face of the substrate, either on main front face or on main rear face.

F1 and F2 may also be glued on different main faces.

### Examples

### Measurements methods:

Luminous transmittance (also called "relative light transmission factor in the visible spectrum") Tv is defined in the standard ISO 13666:1998 and is characterized according to the standard ISO 8980-3 (from 380 to 780 nm).

TmB is the average transmittance of the ophthalmic lens over the range 420-450 nm.

Yellowness Index of light transmitted through lenses is measured according to ASTM E313. YI can be determined from the CIE tristimulus values X, Y, Z through the relation: YI = (128 X - 106 Z) / Y.

Car driving requirements are defined in ISO 8990-3 2013. Three criteria should be met:
▪ Luminous transmittance Tv greater than 80% for clear lenses (class 0).
▪ Relative visual attenuation coefficients, for recognition/detection of incandescent signal lights should fulfil the following conditions: Qred not less than 0.8 for, Qyellow not less than 0.6, Qgreen not less than 0.6, and Qblue not less than 0.4.
▪ Minimum value of transmittance over the range [475-650nm] larger than 0.2*Tv

Example 1:

A first ophthalmic lens L1 as been prepared by gluing on a plano MR8 substrate a (PS/PMMA)⁴⁹PS (OT=0.5*λ₀=215nm, d_{PS}=66.5nm/d_{PMMA}=71.7nm, n_{PS}=1.617/n_{PMMA}=1.499 at λ=430nm) multilayered optical filter with dominant reflection wavelength λ₀=430nm. Transmittance of lens L1 is displayed on Figure 1.

A second ophthalmic lens L2 has been prepared by gluing on a plano MR8 substrate a (PS/PMMA)¹²PS (OT=0.5*λ₀=302.5nm, d_{PS}=95.2nm/d_{PMMA}=101.5nm, n_{PS}=1.589 and n_{PMMA}=1.490 at λ=605nm) multilayered optical filter with dominant reflection wavelength λ₀=605nm. Transmittance of lens L2 is displayed on Figure 2

A third ophthalmic lens L3 has been prepared by gluing on a plano MR8 substrate first a (PS/PMMA)⁴⁹PS (OT=0.5*λ₀=215nm, d_{PS}=66.5nm/d_{PMMA}=71.7nm, n_{PS}=1.617/n_{PMMA}=1.499 at λ=430nm) multilayered optical filter with dominant reflection wavelength λ₀=430nm (F1 filter) then a (PS/PMMA)¹²PS (OT=0.5*λ₀=302.5nm, d_{PS}=95.2nm/d_{PMMA}=101.5nm, n_{PS}=1.589 and n_{PMMA}=1.490 at λ=605nm) multilayered optical filter with dominant reflection wavelength λ₀=605nm (F2 filter). Transmittance of lens L3 is displayed on Figure 3.

A fourth ophthalmic lens L4 has been prepared by gluing on a plano MR8 substrate first a (PS/PMMA)⁴⁹PS (OT=0.5*λ₀=215nm, d_{PS}=66.5nm/d_{PMMA}=71.7nm, n_{PS}=1.617/n_{PMMA}=1.499 at λ=430nm) multilayered optical filter with dominant reflection wavelength λ₀=430nm (F1 filter) then a (PET/PMMA)¹⁴PET (OT=307.5nm, d_{PET}=93nm/d_{PMMA}=103.2nm, n_{PET}=1.653 and n_{PMMA}=1.490nm at 615nm).multilayered optical filter with dominant reflection wavelength λ₀=615nm (F2 filter).

Tv, TmB, YI and car driving requirements have been evaluated for all lenses L1, L2, L3 and L4 are listed in Table 1.

Lens L1 provides with a good protection against harmful blue light: TmB=22%, but light transmitted through lens L1 appears yellowish : YI=32. When filter F2 is added on lens L1, yielding lens L3, protection against blue light is still very good: TmB=22% and light transmitted through lens L3 is less yellowish: YI=14 so that wearer doesn't perceive a noticeable change in colours.

Last, traffic requirements are met by lens L3.

Filter F2 has to be designed carefully to fulfil driving requirement. Filter F2 in lens L4 reduces the yellowness index to be negative. However, lens L4 doesn't fulfil driving requirement with Qred 0.5, less than required 0.8.

### Example 2:

A first ophthalmic lens L11 has been prepared by gluing on a MR8 substrate a (PET/PMMA)⁴⁹PET, PET=64.2nm, PMMA=71.7nm, multilayered optical filter with dominant reflection wavelength λ₀=430nm (filter F1) then a (PET/PMMA)¹⁴PS, PET=87.6nm, PMMA=97.2nm, multilayered optical filter with dominant reflection wavelength λ₀=580nm (Filter F2).

A comparative lens L12 has been prepared by gluing on a MR8 substrate only a (PET/PMMA)⁴⁹PET, PET=64.2nm, PMMA=71.7nm, multilayered optical filter with dominant reflection wavelength λ₀=430nm (filter F1).

Tv, TmB, YI and car driving requirements have been evaluated for lenses L11 and L12.

Lenses L11 and L12 provide a very good protection against blue light.

**Table 1**

| | L1 | L2 | L3 | L4 | L11 | L12 |
|---|---|---|---|---|---|---|
| Tv% | 89 | 80 | 80 | 72 | 56 | 87 |
| TmB% | 22 | 87 | 22 | 22 | 7.9 | 7.9 |
| YI | 32 | -20 | 14 | -11 | -2 | 44 |
| QTraffic (R/Y/G/B) | 1.0/1.0/ 1.0/1.0 | 0.8/0.9/ 1.1/1.1 | 0.8/0.9/ 1.1/1.1 | 0.5/0.8/ 1.2/1.2 | 1.1/0.8/ 1.2/1.4 | 1.0/1.0/ 1.0/1.0 |
| Tmin% [475-650 nm] | 88 | 54 | 54 | 19 | 17 | 84.3 |
| Car driving requirements | Pass | Pass | Pass | Fail | Pass | Pass |

In addition two samples of defined hue have been used :
▪ R/Y is a red/yellow sample with hue components Hc(red)=73 and Hc(Yellow)=27. This sample has a hue Hsource=27 in CIECAM02 model.
▪ Y/G is a yellow/green sample with hue components Hc(yellow)=40 and Hc(Green)=60. This sample has a hue Hsource=160 in CIECAM02 model.

R/Y and Y/G samples have been observed through lenses L11 and L12. Hue of light transmitted through lens L11 and L12 is detailed in Table 2.

**Table 2**

| Hue composition | R/Y Sample | R/Y through L12 | R/Y through L11 | Y/G Sample | Y/G through L12 | Y/G through L11 |
|---|---|---|---|---|---|---|
| Hc (Red) | **73** | **58** | **80** | 0 | 0 | 0 |
| Hc (Yellow) | 27 | 42 | 20 | 40 | 44 | 22 |
| Hc (Green) | 0 | 0 | 0 | **60** | **56** | **78** |
| Hc (Blue) | 0 | 0 | 0 | 0 | 0 | 0 |
| Hue | 27 | 42 | 20 | 160 | 156 | 178 |

Table 2 demonstrates that lens L11 restores contrast perception of the wearer. Sample R/Y is perceived redder through lens L11 than without lens, whereas lens L12 mixes red and yellow component of R/Y sample. Similarly, sample Y/G is perceived greener through lens L11 than without lens, whereas lens L12 mixes green and yellow component of Y/G sample.

Lens L11 provides a very efficient protection against harmful blue light and restores a good contrast of colours. In addition, YI of light transmitted through lens L11 is very small, and slightly negative: with such lenses, wearer will not perceive a yellowish appearance of his surroundings.

Lens L11 is a light tint sunglass of class 1.

## Claims

1. Ophthalmic lens for improved colour perception comprising
▪ a first organic optical filter F1 having a reflection band B1 with a reflection peak P1 comprised in the range [400nm-460nm], and
▪ a second organic optical filter F2, different from F1, having a reflection band B2 with a reflection peak P2 comprised in the range [530nm-650nm].

2. Ophthalmic lens according to claim 1, **characterized in that** light transmission through said ophthalmic lens at reflection peak P1 is lower than 75%, preferably lower than 50%.

3. Ophthalmic lens according to claim 1 or 2, **characterized in that** light transmission through said ophthalmic lens at reflection peak P2 is lower than 80%, preferably lower than 60%.

4. Ophthalmic lens according to any one of claims 1 to 3, **characterized in that** Yellowness Index of light transmitted through said ophthalmic lens is lower than 30, preferably lower than 20.

5. Ophthalmic lens according to any one of claims 1 to 4, **characterized in that** light emitted from a sample with a hue Hsource between 0 and 100 and transmitted through said ophthalmic lens has a hue Htrans lower than Hsource, in CIECAM02 model.

6. Ophthalmic lens according to any one of claims 1 to 4, **characterized in that** light emitted from a sample with a hue Hsource between 100 and 200 and transmitted through said ophthalmic lens has a hue Htrans greater than Hsource, in CIECAM02 model.

7. Ophthalmic lens according to any one of claim 1 to 6, **characterized in that** relative visual attenuation coefficients, for recognition/detection of incandescent traffic signal lights, are not less than 0.8 for Qred, 0.6 for Qyellow, 0.6 for Qgreen, and 0.4 for Qblue.

8. Ophthalmic lens according to any one of claim 1 to 7, **characterized in that** the average transmittance TmB over the range 420-450 nm is lower than 80%, preferably lower than 60%, more preferably lower than 35%.

9. Method of preparation of an ophthalmic lens with improved colour perception comprising the following steps
▪ providing a substrate with a main front face and a main rear face,
▪ gluing on any main face of said substrate, in any order:
o a first organic optical filter F1 having a reflection band B1 with a reflection peak P1 comprised in the range [400nm-460nm], and
o a second organic optical filter F2, different from F1, having a reflection band B2 with a reflection peak P2 comprised in the range [530nm-650nm].
